# FASCICULE DE BREVET EUROPEEN

(11) **EP 2 619 117 B1**
(45) Date de publication et mention de la délivrance du brevet: **20.02.2019**
(21) Numéro de dépôt: 11757173.7
(22) Date de dépôt: 08.09.2011
(51) Int. Cl.: B65H 29/04, B65G 23/44

(54) **MACHINE DE TRAITEMENT D'ELEMENTS EN FEUILLES COMPRENANT UN TENDEUR DE TRAINS DE CHAINES**
MASCHINE ZUR VERARBEITUNG VON BLATTELEMENTEN MIT EINEM KETTENSATZSPANNER
MACHINE FOR PROCESSING SHEET MEMBERS INCLUDING A CHAIN-SET TENSIONER

(30) Priorité: 22.09.2010 EP 10010183
(43) Date de publication de la demande: 31.07.2013
(73) Titulaire: BOBST MEX SA, 1031 Mex (CH)
(72) Inventeur: CUENNET, Ludovic, CH-1870 Montey (CH); MORELLI, Sandro, CH-1020 Renens (CH); REBEAUD, Jean-Claude, CH-1052 Le Mont-sur-Lausanne (CH)
(74) Mandataire: Wagner, Sigrid
(86) Numéro de dépôt international: PCT/EP2011/004534
(87) Numéro de publication internationale: WO 2012/038035

(56) Documents cités:
- EP-A2- 1 679 188
- FR-A5- 2 179 386

## Description

La présente invention concerne une machine de traitement d'éléments en forme de feuilles comprenant un tendeur de trains de chaînes.

L'invention trouve une application avantageuse, mais non exclusive, dans le domaine des machines de transformation de feuilles de papier ou de carton pour la fabrication d'emballages.

Une machine de traitement d'éléments en forme de feuilles comprend une succession de stations de travail, dont éventuellement une station de travail comprenant une presse à platine pour effectuer une transformation des feuilles.

Il est en effet courant d'effectuer une opération de transformation d'une feuille de papier ou de carton au sein d'une machine de traitement d'éléments en feuilles. Il peut s'agir par exemple d'une opération d'impression, y compris d'impression de textes et/ou de motifs par estampage à chaud, c'est-à-dire par la dépose par pression d'une pellicule colorée ou métallisée issue d'une ou plusieurs bandes à estamper. Il peut aussi s'agir d'embossage ou de refoulage, c'est-à-dire de déformation de la feuille afin de lui imprimer un relief. Il peut également s'agir de découpe afin de découper la feuille pour la transformer en une ou plusieurs poses. Dans l'industrie, une telle opération de transformation est usuellement réalisée au moyen d'une presse à platine verticale, dans laquelle les feuilles sont introduites une à une.

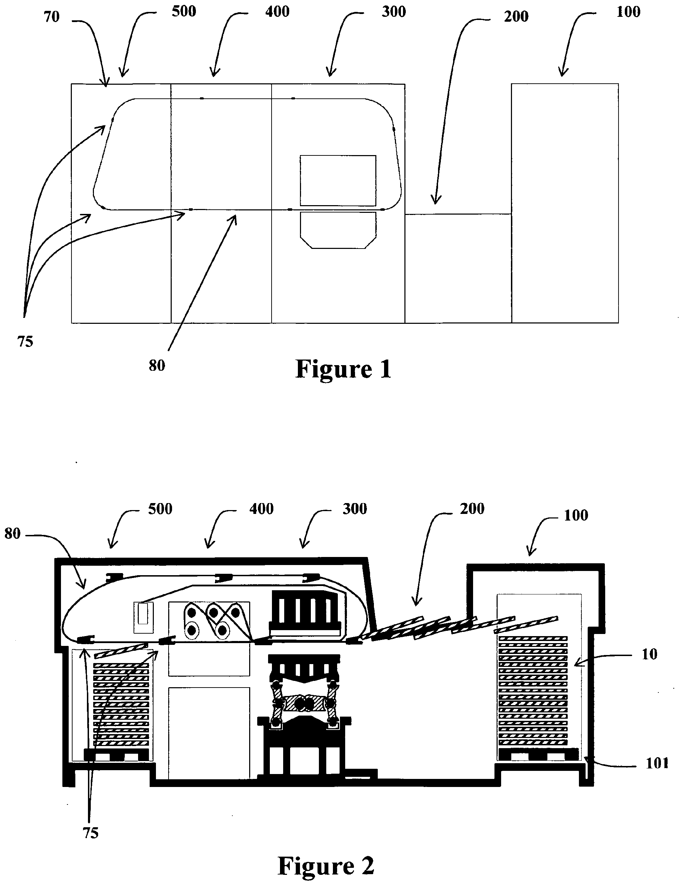

Dans l'exemple de machine schématisé sur la Figure 1, l'opération de transformation de chaque feuille s'opère dans une station de travail 300 comprenant une presse à platines, entre une platine fixée horizontalement, et une platine montée mobile en déplacement suivant un mouvement de va-et-vient vertical. Les autres stations peuvent par exemple effectuer un travail d'éjection des déchets après une découpe, ou un travail de séparation des poses après une découpe, ou un travail de réception des poses ou des feuilles transformées. Ce type de machine de traitement d'éléments en feuilles étant automatisé, des moyens de transport sont prévus pour amener chaque feuille successivement dans chacun des postes de travail.

Dans la pratique, il s'agit habituellement d'une série de barres transversales munies de pinces 70. Ces barres transversales, communément appelées barres de pinces, viennent chacune à leur tour saisir une feuille au niveau de son bord frontal, avant de la tirer successivement dans les différents postes de travail de la machine.

Les extrémités des barres de pinces 70 sont chacune reliées respectivement à une chaîne latérale formant une boucle, communément appelée train de chaînes 80. Les brevets EP-B-448 943 et EP-B-680 906 décrivent en détail des exemples de réalisation de barres de pinces et de trains de chaînes.

Grâce à un mouvement transmis aux trains de chaînes 80, l'ensemble des barres de pinces 70 va partir d'une position arrêtée, accélérer, atteindre une vitesse maximale, décélérer, puis s'arrêter, en décrivant ainsi un cycle d'accélération et de vitesse correspondant au déplacement d'une feuille d'un poste de travail au poste de travail suivant. Chaque station effectue son travail en synchronisme avec ce cycle que l'on appelle communément cycle machine. Les déplacements, accélérations, vitesses, forces, sont souvent représentés sur une courbe correspondant à un cycle machine avec une abscisse variant entre de 0° à 360°. Une abscisse sur ce genre de courbe est communément appelée angle machine (AM). La machine schématisée sur la Figure 1 comprend huit barres de pinces 70. Par conséquent, dans cette machine une barre de pince occupera une position donnée tous les huit cycles machines.

Des phénomènes de vibrations se produisent le long les trains de chaînes 80, et perturbent leur comportement dynamique. Afin de limiter ces phénomènes de vibrations, des ressorts sont utilisés afin de servir de tendeurs pour les trains de chaînes 80, en appliquant une force sur un dispositif de guidage en contact avec la chaîne, le dispositif de guidage pouvant par exemple être une poulie.

Avec l'augmentation des cadences des machines, les barres de pinces 70 et les trains de chaînes 80 sont soumis à des contraintes mécaniques de plus en plus élevées, et doivent donc être de plus en plus résistants. Les phénomènes vibratoires sont également plus violents, et imposent l'utilisation de ressorts plus puissants qui exercent des tensions plus importantes, ce qui augmente d'autant les contraintes mécaniques sur les trains de chaînes 80, en réduisant leur durée d'utilisation et en augmentant les risques de panne ou de casse. Il faut alors renforcer les trains de chaînes 80, donc augmenter la puissance des éléments moteurs et de freinage qui vont les accélérer et les ralentir au cours de chaque cycle.

Le problème technique résolu par l'objet de l'invention est donc d'améliorer le dispositif de réduction des phénomènes vibratoires le long d'un train de chaînes 80.

La solution au problème technique posé consiste, selon la présente invention, en ce que la machine de traitement d'éléments en forme de feuilles comprend, en combinaison, l'ensemble des caractéristiques définies par la revendication 1.

La présente invention concerne également des caractéristiques optionnelles avantageuses qui ressortiront au cours de la description qui va suivre, et qui devront être considérées isolément ou selon toutes leurs combinaisons techniques définies par les revendications dépendantes 2 à 10. EP 1 679 188 A2 décrit un dispositif avec les caractéristiques du préambule de la revendication 1.

Cette description, donnée à titre d'exemple non limitatif, est destinée à mieux faire comprendre en quoi consiste l'invention et comment elle peut être réalisée. Elle est donnée en référence aux dessins annexés dans lesquels:
La figure 1 illustre de façon très schématique une machine de traitement d'éléments en forme de feuilles,
La figure 2 montre une machine d'estampage à platine,
La figure 3 est un vue schématique de dessus d'un mode de réalisation particulier de l'invention,
La figure 4 est un vue schématique de côté d'un mode de réalisation particulier de l'invention.

Il est entendu que dans l'ensemble de ce texte, les termes « feuille » ou « élément en feuilles » ou « élément en forme de feuilles » désignent de façon très générale tout support d'impression en forme de feuilles tel que, par exemple, des feuilles de carton, de papier, de matière plastique, etc.

La figure 1 représente une presse à platine pour la transformation de feuilles. Cette machine de traitement 1 est classiquement composée de plusieurs stations de travail qui sont juxtaposées mais interdépendantes une à une pour former un ensemble unitaire. On trouve ainsi une station d'introduction 100, une table de marge 200, un dispositif de transformation à platines 300, une station d'évacuation des déchets 400, et une station de réception 500.

La figure 2 représente schématiquement une machine classique d'estampage. La station d'introduction 100 est approvisionnée par l'intermédiaire d'une palette (101) sur laquelle sont empilées une pluralité de feuilles (10), par exemple de carton. Ces dernières sont successivement enlevées au dessus de la pile par un organe de préhension à même de les envoyer sur la table de marge 200 directement adjacente. Dans certaines machines, les feuilles sont enlevées du dessous de la pile. Il est à noter que de telles station d'introduction 100 et table de marge 200 sont tout à fait standards, et que c'est donc pour de simples raisons de clarté qu'elles n'ont pas été représentées plus en détails ici.

Au niveau de la table de marge 200, les feuilles (10) sont mises en nappe directement par l'organe de préhension, c'est-à-dire posées l'une après l'autre de façon à se chevaucher partiellement. L'ensemble de la nappe est entraîné en déplacement en direction du dispositif de transformation à platines 300. Pour cela, il est utilisé un classique système de transport à courroie qui là encore n'a pas été représenté pour d'évidentes raisons de clarté. A l'extrémité de la nappe, la feuille de tête est systématiquement positionnée avec précision, par exemple au moyen de taquets frontaux et latéraux.

Dans la machine schématisée sur la Figure 2, la station de travail 300 située immédiatement après la table de marge 200 comprend un dispositif de transformation à platines. Enfin, la machine d'estampage représentée à la figure 2 comprend des moyens de transport qui permettant de déplacer individuellement chaque feuille depuis la sortie de la table de marge 200 jusqu'à la station de réception 500, au travers des stations de travail 300 et 400.

De la même façon que dans la machine schématisée sur la Figure 1, les moyens de transport utilisent une série de barres de pinces 70 qui sont montées mobiles en translation transversale par l'intermédiaire de deux trains de chaînes 80 disposés latéralement de chaque côté de la machine d'estampage. Chaque train de chaînes 80 parcourt une boucle qui permet aux barres de pinces 70 de suivre une trajectoire passant successivement par la presse à platine 300, la station d'évacuation des déchets 400 et la station de réception 500.

Le processus de traitement des feuilles dans la machine s'achève dans la station de réception 500 dont la principale fonction est de reconditionner en pile les feuilles 10 transformées. Dans le cas de la machine d'estampage représentée sur la Figure 2, il s'agit de feuilles 10 ayant subi un estampage. Dans d'autres machines il pourra s'agir de poses obtenues par découpage de la feuille 10 dans une presse à platines de découpe. Pour cela, les moyens de transport sont agencés de manière à relâcher automatiquement les feuilles 10 ou les poses lorsqu'elles se retrouvent au droit de cette nouvelle pile et tombent alors de façon équerrée sur le dessus de la pile.

Dans une machine de traitement selon l'art antérieur, les deux trains de chaînes 80 subissent une tension générée par un ou des tendeurs. Ce ou ces tendeurs peuvent être placés indifféremment dans la machine le long du parcours des trains de chaînes 80 et appliquent une force sur des dispositifs de guidage de chaîne, par exemple des poulies. La force appliquée par le dispositif tendeur sur le dispositif de guidage de chaîne est déterminée par les phénomènes vibratoires les plus importants que subissent les trains de chaînes 80 et les barres de pinces 70 qu'ils entraînent, c'est-à-dire à la cadence maximale de la machine. Lorsque l'usure des trains de chaînes 80 dégrade leur comportement dynamique, il faut alors réduire la cadence de la machine ou augmenter la puissance du tendeur. Le plus souvent le dispositif tendeur consiste en un ressort qui fonctionne soit en traction soit en compression. Mais la force applique peut également être générée par tout type de dispositif de rappel, comme par exemple une masse suspendue. Le dispositif tendeur permet également de rattraper le jeu dû à l'usure des trains de chaînes et à leur dilatation.

Tout comme dans l'art antérieur, le dispositif tendeur selon l'invention peut être placé n'importe où le long du parcours des trains de chaînes 80.

Selon l'invention, le tendeur comporte au moins un organe moteur 50 apte à générer une force variable dont l'intensité est fonction de la cadence instantanée de la machine. Cela signifie que le tendeur est dynamique et adapte la force appliquée sur un dispositif de guidage en permanence en fonction de la cadence de la machine. En effet, les vibrations le long des trains de chaînes 80 augmentent en fonction de la cadence de la machine, et la tension doit être ajustée en conséquence.

Pour ce faire, le dispositif tendeur comporte donc un organe moteur 50 qui sera typiquement un moteur. Bien que tout type de moteur puisse être utilisé, on utilisera avantageusement un moteur linéaire. En effet, on veut contrôler une force appliquée par le dispositif tendeur. Or un moteur classique sera commandé en déplacement et nécessitera une mesure de la tension du train de chaînes dont la régulation se fera en boucle fermée ; alors que pour un moteur linéaire une commande en courant est équivalente à une commande directe de la force appliquée par le moteur et donc à une commande directe de la force de tension dans les trains de chaînes. Par conséquent en utilisant un moteur linéaire commandé en courant, il n'est plus nécessaire de mesurer la tension du train de chaînes 80 dont la régulation peut se faire en boucle ouverte.

La force de tension dans les trains de chaînes 80 sera donc également fonction de la cadence instantanée de la machine, ce qui permet de lutter efficacement contre les phénomènes vibratoires tout en limitant les contraintes sur les trains de chaînes 80. Ceci permet de ralentir fortement leur usure et d'augmenter sensiblement leur durée de vie.

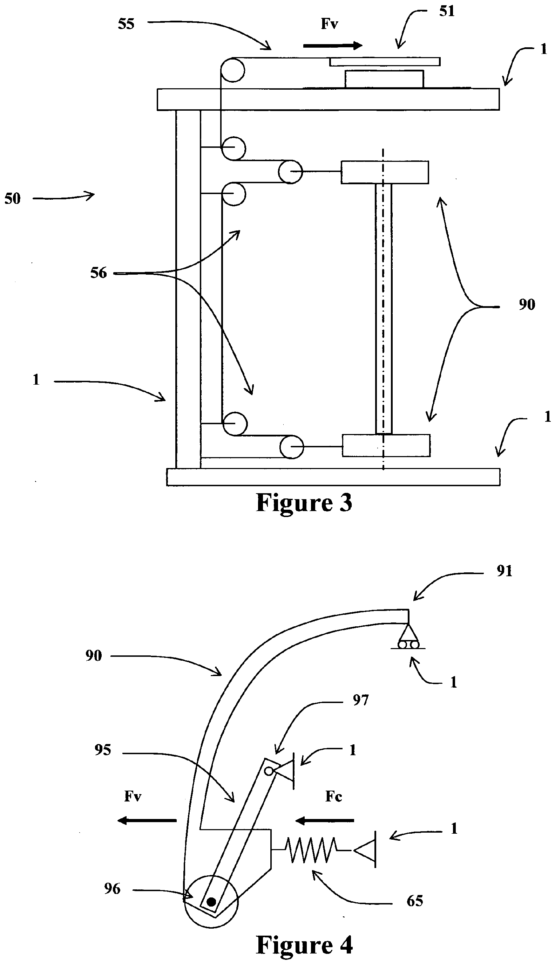

Les Figures 3 et 4 représentent schématiquement un exemple de mise en oeuvre de l'invention dans lequel le dispositif tendeur se situe au niveau de la station d'éjection de la machine, correspondant à la station de travail 500 des Figures 1 et 2.

Un tendeur dynamique selon l'invention peut comporter un organe moteur par train de chaînes 80, ou bien, comme dans le mode de réalisation particulièrement avantageux représenté sur la Figure 3, un unique organe moteur 50 générant une force de tension simultanément dans les deux trains de chaînes 80 en appliquant une force simultanément sur deux dispositifs de guidage 90, un par train de chaîne 80.

Par ailleurs le tendeur dynamique peut appliquer une force de tension sur les trains de chaînes 80 par compression, c'est-à-dire en poussant sur les trains de chaînes ; ou bien par traction, c'est-à-dire en tirant sur les trains de chaînes. De façon avantageuse, la force de tension sera appliquée par traction. En effet, et comme cela est représenté sur la Figure 3, seul ce type d'application permet d'utiliser des courroies 55, alors que la compression impose d'utiliser des moyens mécaniques plus complexes et plus onéreux.

Par ailleurs, une courroie 55 peut facilement coopérer avec un palan 56, c'est-à-dire un dispositif comprenant des poulies permettant de démultiplier la force de traction générée par l'organe moteur 50.

Dans l'exemple de tendeur dynamique selon l'invention schématisé par la Figure 3, la force de traction au sein des trains de chaînes est générée par l'application sur deux dispositifs de guidage de chaînes de la force générée par un unique moteur linéaire 50. Cette force est appliquée au travers d'une courroie 55 coopérant avec un palan 56 multipliant par quatre la force générée par le moteur linéaire 50. Ceci permet d'utiliser un moteur linéaire moins puissant donc moins onéreux.

La Figure 4 représente de façon schématique un mode de réalisation particulièrement avantageux de l'invention dans lequel le dispositif tendeur génère la force de tension dans les trains de chaînes 80 en agissant sur des dispositifs de guidage de chaînes particuliers dont l'une des extrémités est mobile en translation par rapport au bâti de la machine. Ce mode de réalisation permet de générer une force de tension importante dans les trains de chaînes 80 tout en limitant les déplacements des dispositifs de guidage de chaînes. Si par exemple la force était appliquée sur une poulie placée au milieu de la partie supérieure du parcours des trains de chaînes, il faudrait pour générer une même force de tension dans les trains de chaînes 80 un déplacement beaucoup plus important de la poulie que le déplacement qu'effectue le dispositif de guidage représenté sur la Figure 4.

Les deux extrémités des dispositifs de guidage de chaînes peuvent être mobiles en translation, mais il est particulièrement avantageux d'avoir une seule extrémité mobile en translation et de relier les dispositifs de guidages de chaînes à l'extrémité d'un levier pendulaire dont l'autre extrémité est libre en rotation autour d'un axe solidaire du bâti. Ce mode de réalisation particulier, représenté sur la Figure 4, permet à la seconde extrémité des dispositifs de guidage de chaînes d'effectuer un déplacement proche d'une translation, tout en réduisant fortement les frottements par rapport à un mode de réalisation dans lequel les deux extrémités des dispositifs de guidage de chaînes seraient mobiles uniquement en translation.

Le dispositif tendeur 50 comprend également au moins un dispositif de rappel (65) générant une force sensiblement constante Fc qui est appliquée aux dispositifs de guidage de chaîne 90. En effet il est toujours souhaitable de générer une force de tension minimale dans les trains de chaînes 80. Cette force minimale permet par exemple de rattraper les jeux dus à l'usure ou à la dilatation des trains de chaînes 80. Dès lors la présence d'un dispositif de rappel 65 générant une force sensiblement constante Fc permet d'utiliser un organe moteur 51 moins puissant et d'économiser l'énergie consommée par cet organe moteur. De plus, en cas de panne de l'organe moteur 51 ou de son circuit de commande, la machine peut toujours être utilisée, mais à une cadence réduite, grâce à cette force de tension minimale présente dans les trains de chaînes.

Sur la Figure 4, le dispositif de rappel représenté est un ressort travaillant en compression. Mais tout type de dispositif de rappel peut être utilisé, comme par exemple une masse exerçant une force de traction au moyen de son poids.

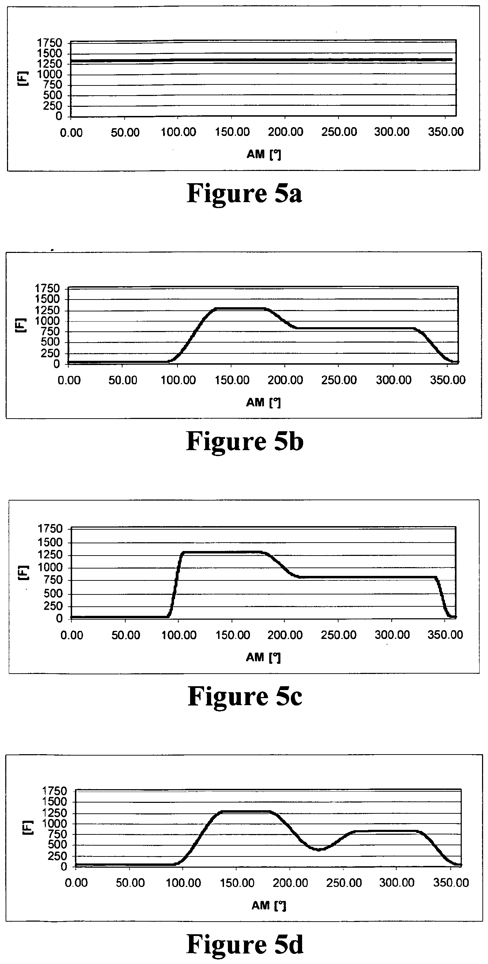

Enfin, la série de Figures 5b à 5e illustre des modes de réalisation particulièrement avantageux. La Figure 5a représente la variation de la force Fv (Fv est donc l'ordonnée de la courbe) au cours d'un cycle machine (l'angle machine MA est donc l'abscisse qui varie de 0° à 360°) à cadence machine instantanée constante, au cours lequel la force variable Fv générée par l'élément moteur 51 dépend uniquement de cette cadence instantanée. La courbe est logiquement une droite, et la valeur de Fv, constante sur ce cycle machine, dépend uniquement de la cadence de la machine durant ce cycle.

Or on a vu que, lors d'un cycle machine, les trains de chaînes 80 sont à l'arrêt pour que les éléments en forme de feuilles 10 puissent subir une transformation dans une station de travail, puis accélèrent pour transporter les éléments en forme de feuilles 10, puis ralentissent de façon à stopper lorsque les éléments en forme de feuilles 10 sont correctement placés dans la station de travail suivante. Par conséquent les phénomènes vibratoires au sein des trains de chaînes 80 varient fortement au cours d'un cycle machine. Ils sont nuls lorsque les trains de chaînes 80 sont arrêtés, puis augmentent fortement lorsque les trains de chaînes 80 accélèrent, puis décroissent, etc. Il est donc particulièrement avantageux que la force variable Fv générée par l'organe moteur 51 non seulement varie en fonction de la cadence instantanée de la machine, mais également en fonction de l'angle machine AM, lequel varie de 0° à 360° au cours d'un cycle machine.

Ainsi la Figure 5b représente l'évolution de la force variable Fv générée par l'organe moteur 51, au cours d'un cycle machine durant lequel la cadence de la machine est constante, dans l'hypothèse où les phénomènes vibratoires dans les trains de chaînes sont moins importants lorsque les trains de chaînes décélèrent que lorsqu'ils accélèrent ou lorsqu'ils sont à la vitesse maximale. Dans ce cas de figure la force variable Fv générée par l'organe moteur 51 est maximale uniquement lorsque les trains de chaînes accélèrent ou sont à leur vitesse maximale. La Figure illustre parfaitement les économies d'énergie et surtout la réduction très importante des contraintes exercées sur les trains de chaînes par la force de tension en leur sein. Ce type de commande permet d'allonger fortement la durée de vie des trains de chaînes en réduisant leur usure.

La Figure 5c illustre le fait que l'évolution de la force variable Fv générée par l'organe moteur 51 dépend également d'autres paramètres. Les trains de chaînes de la machine correspondant à la Figure 5c accélèreront et ralentiront plus vite que les trains de chaînes de la machine correspondant à la Figure 5b, ce qui se traduit par des pentes plus importantes lors des variations de la force variable Fv.

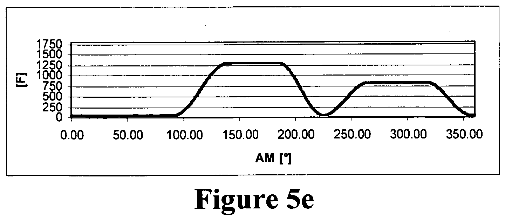

Les Figures 5d et 5e illustrent le fait qu'une analyse fine des phénomènes vibratoires au cours d'un cycle machine peut permettre de faire évoluer la force variable Fv de façon plus complexe au cours d'un cycle machine, pour optimiser la durée de vie des trains de chaînes 80.

Sur les Figures 5b à 5e, la force variable Fv générée par l'organe moteur 51 a parfois une valeur nulle. C'est parce que ces Figures correspondent à des modes de réalisation dans lesquels le dispositif tendeur 50 comprend également un dispositif de rappel 65 qui génère une force sensiblement constante Fc, comme exposé précédemment. Les Figures 5d et 5e correspondent donc à des machines équipées de dispositifs tendeurs 50 extrêmement performants.

Il est à noter que dans le cadre de l'invention, la notion de machine de traitement couvre un très grand nombre de réalisations du fait de la structure modulaire de ces ensembles. Suivant le nombre, la nature et l'agencement des stations de travail utilisées, il est en effet possible d'obtenir une multitude de machines de traitement différentes.

Il est également important de souligner qu'il existe d'autres types de stations de travail que ceux précédemment évoqués dans la cadre de la description de la machine. On pense par exemple ici à des stations de découpage, des stations de séparation de poses, à des stations d'éjection de déchets, des stations de chargement de bandes à estamper, etc. Enfin, il est entendu qu'une même machine de traitement peut très bien être équipée de plusieurs stations d'un même type.

## Revendications

1. Machine de traitement d'éléments en forme de feuilles (10), comprenant
- une pluralité de stations de travail (100, 200, 300, 400, 500),
- un dispositif de transport (70) pour transporter chaque feuille (10) successivement dans différentes stations de travail (300, 400, 500), comprenant deux trains de chaînes (80) latéraux reliés aux extrémités d'une pluralité de barres de pinces transversales (75) aptes à saisir les feuilles (10) par leurs bords frontaux,
- au moins un dispositif de guidage de chaînes (90) par train de chaînes (80),
- au moins un dispositif tendeur (50) générant une force de tension dans lesdits deux trains de chaînes (80), et comprenant au moins un organe moteur (51) apte à générer une force variable (Fv) dont l'intensité est fonction de la cadence instantanée de la machine, ladite force variable (Fv) étant appliquée sur lesdits dispositifs de guidage de chaînes (90),
**caractérisée en ce que**
le dispositif tendeur (50) comprend également au moins un dispositif de rappel (65) générant une force sensiblement constante (Fc), ladite force constante (Fc) étant appliquée en combinaison avec ladite force variable (Fv) générée par ledit organe moteur (51).

2. Machine de traitement d'éléments en forme de feuilles selon la revendication 1, **caractérisée en ce que** l'organe moteur (51) est un moteur linéaire.

3. Machine de traitement d'éléments en forme de feuilles selon la revendication 2, **caractérisée en ce que** le moteur linéaire (51) est commandé en courant.

4. Machine de traitement d'éléments en forme de feuilles selon l'une des revendications précédentes, **caractérisée en ce que** le dispositif de rappel (65) est un ressort ou une masse exerçant une force de traction au moyen de son poids.

5. Machine de traitement d'éléments en forme de feuilles selon l'une des revendications précédentes, **caractérisée en ce que** ladite force variable (Fv) générée par l'organe moteur (51) varie également en fonction de l'angle machine (AM).

6. Machine de traitement d'éléments en forme de feuilles selon l'une des revendications précédentes, **caractérisée en ce que** l'une des extrémités (91) des dispositifs de guidage de chaînes (90) sur lesquels est appliquée la force variable (Fv) générée par l'organe moteur (51) est mobile en translation par rapport au bâti (1) de la machine.

7. Machine de traitement d'éléments en forme de feuilles selon l'une des revendications précédentes, **caractérisée en ce que** l'organe moteur (51) génère une force variable (Fv) de traction.

8. Machine de traitement d'éléments en forme de feuilles selon la revendication 7, **caractérisée en ce que** le dispositif tendeur (50) comprend un unique organe moteur (51) générant une force variable de traction (Fv) appliquée au travers d'une courroie (55) simultanément sur deux dispositifs de guidage de chaînes (90).

9. Machine de traitement d'éléments en forme de feuilles selon la revendication 8, **caractérisée en ce que** la courroie (55) coopère avec un palan (56) démultipliant la force variable de traction (Fv) générée par l'organe moteur (51).

10. Machine de traitement d'éléments en forme de feuilles selon la revendication 6, **caractérisée en ce que** chaque dispositif de guidage de chaînes (90) sur lequel est appliquée la force variable (Fv) générée par l'organe moteur (51) est relié à une extrémité (96) d'un levier pendulaire latéral (95) dont l'autre extrémité (97) est libre en rotation autour d'un axe solidaire du bâti (1) de la machine.

## Patentansprüche

1. Maschine zur Behandlung von Elementen in der Form von Blättern (10), umfassend:
- eine Vielzahl von Arbeitsstationen (100, 200, 300, 400, 500),
- eine Transportvorrichtung (70) für den Transport jedes Blatts (10) aufeinanderfolgend in verschiedenen Arbeitsstationen (300, 400, 500), umfassend zwei laterale Kettenzüge (80), welche mit den Enden einer Vielzahl von Quergreiferstangen (75) verbunden sind, die geeignet sind, die Blätter (10) an ihren vorderen Rändern zu ergreifen,
- mindestens eine Kettenführungsvorrichtung (90) pro Kettenzug (80),
- mindestens eine Spannvorrichtung (50), die eine Spannkraft in den beiden Kettenzügen (80) erzeugt, und mindestens ein Motororgan (51) umfasst, das geeignet ist, eine variable Kraft (Fv) zu erzeugen, deren Intensität eine Funktion der momentanen Kadenz der Maschine ist, wobei die variable Kraft (Fv) auf die Kettenführungsvorrichtungen (90) ausgeübt wird,
**dadurch gekennzeichnet, dass**
die Spannvorrichtung (50) auch mindestens eine Rückholvorrichtung (65) umfasst, die eine im Wesentlichen konstante Kraft (Fc) erzeugt, wobei die konstante Kraft (Fc) in Kombination mit der variablen Kraft (Fv) ausgeübt wird, die von dem Motororgan (51) erzeugt wird.

2. Maschine zur Behandlung von Elementen in der Form von Blättern nach Anspruch 1, **dadurch gekennzeichnet, dass** das Motororgan (51) ein linearer Motor ist.

3. Maschine zur Behandlung von Elementen in der Form von Blättern nach Anspruch 2, **dadurch gekennzeichnet, dass** der lineare Motor (51) mit Strom gesteuert wird.

4. Maschine zur Behandlung von Elementen in der Form von Blättern nach einem der vorstehenden Ansprüche, **dadurch gekennzeichnet, dass** die Rückholvorrichtung (65) eine Feder oder eine Masse ist, die eine Zugkraft mittels ihres Gewichts ausübt.

5. Maschine zur Behandlung von Elementen in der Form von Blättern nach einem der vorstehenden Ansprüche, **dadurch gekennzeichnet, dass** die variable Kraft (Fv), die von dem Motororgan (51) erzeugt wird, auch als Funktion des Maschinenwinkels (AM) variiert.

6. Maschine zur Behandlung von Elementen in der Form von Blättern nach einem der vorstehenden Ansprüche, **dadurch gekennzeichnet, dass** eines der Enden (91) der Kettenführungsvorrichtungen (90), auf welche die variable Kraft (Fv) ausgeübt wird, die von dem Motororgan (51) erzeugt wird, translatorisch in Bezug auf den Rahmen (1) der Maschine bewegbar ist.

7. Maschine zur Behandlung von Elementen in der Form von Blättern nach einem der vorstehenden Ansprüche, **dadurch gekennzeichnet, dass** das Motororgan (51) eine variable Zugkraft (Fv) erzeugt.

8. Maschine zur Behandlung von Elementen in der Form von Blättern nach Anspruch 7, **dadurch gekennzeichnet, dass** die Spannvorrichtung (50) ein einziges Motororgan (51) umfasst, das eine variable Zugkraft (Fv) erzeugt, die quer über einen Riemen (55) gleichzeitig auf zwei Kettenführungsvorrichtungen (90) ausgeübt wird.

9. Maschine zur Behandlung von Elementen in der Form von Blättern nach Anspruch 8, **dadurch gekennzeichnet, dass** der Riemen (55) mit einem Hebezeug (56) zusammenwirkt, das die variable Zugkraft (Fv) untersetzt, die von dem Motororgan (51) erzeugt wird.

10. Maschine zur Behandlung von Elementen in der Form von Blättern nach Anspruch 6, **dadurch gekennzeichnet, dass** jede Kettenführungsvorrichtung (90), auf welche die variable Kraft (Fv) ausgeübt wird, die von dem Motororgan (51) erzeugt wird, mit einem Ende (96) eines lateralen Pendelhebels (95) verbunden ist, dessen anderes Ende (97) in Rotation um eine feste Achse des Rahmens (1) der Maschine frei ist.

## Claims

1. Machine for processing elements in the form of sheets (10), comprising
- a plurality of work stations (100, 200, 300, 400, 500),
- a transport device (70) for transporting each sheet (10) successively in different work stations (300, 400, 500), comprising two lateral chain sets (80) which are connected to the ends of a plurality of transverse gripper bars (75) which are capable of gripping the sheets (10) on the front edges thereof,
- at least one device for guiding chains (90) by means of a chain set (80),
- at least one tensioning device (50) generating a tension force in said two chain sets (80), and comprising at least one motor element (51) which is capable of generating a variable force (Fv), the intensity of which is dependent on the current rate of the machine, said variable force (Fv) being applied to said chain-guiding devices (90),
**characterised in that**
the tensioning device (50) also comprises at least one return device (65) generating a substantially constant force (Fc), said constant force (Fc) being applied in combination with said variable force (Fv) generated by said motor element (51).

2. Machine for processing elements in the form of sheets according to claim 1, **characterised in that** the motor element (51) is a linear motor.

3. Machine for processing elements in the form of sheets according to claim 2, **characterised in that** the linear motor (51) is current-controlled.

4. Machine for processing elements in the form of sheets according to any of the preceding claims, **characterised in that** the return device (65) is a spring or a mass exerting a traction force by means of the weight thereof.

5. Machine for processing elements in the form of sheets according to any of the preceding claims, **characterised in that** said variable force (Fv) generated by the motor element (51) also varies according to the machine angle (AM).

6. Machine for processing elements in the form of sheets according to any of the preceding claims, **characterised in that** one of the ends (91) of the chain-guiding devices (90) to which the variable force (Fv) generated by the motor element (51) is applied is movable in translation in relation to the frame (1) of the machine.

7. Machine for processing elements in the form of sheets according to any of the preceding claims, **characterised in that** the motor element (51) generates a variable traction force (Fv).

8. Machine for processing elements in the form of sheets according to claim 7, **characterised in that** the tensioning device (50) comprises a single motor element (51) generating a variable traction force (Fv) applied by means of a belt (55) simultaneously to two chain-guiding devices (90).

9. Machine for processing elements in the form of sheets according to claim 8, **characterised in that** the belt (55) cooperates with a hoist (56) which multiplies the variable traction force (Fv) generated by the motor element (51).

10. Machine for processing elements in the form of sheets according to claim 6, **characterised in that** each chain-guiding device (90) to which the variable force (Fv) generated by the motor element (51) is applied is connected to one end (96) of a lateral pendulum lever (95), the other end (97) of which is free to rotate about an axle which is rigidly connected to the frame (1) of the machine.
